# EUROPEAN PATENT APPLICATION

(11) **EP 1 771 017 A2**
(43) Date of publication of application: **04.04.2007**
(21) Application number: 06020140.7
(22) Date of filing: 26.09.2006
(51) Int. Cl.: H04Q 7/22

(54) **Method and system for providing accident broadcasting guidance service in a mobile communications system**

(30) Priority: 28.09.2005 KR 20050090766
(71) Applicant: Samsung Electronics Co., Ltd., Suwon-si, Gyeonggi-Do (KR)
(72) Inventor: Kim, Jae-Il, c/o Samsung Electronics Co., Ltd., Suwon-si, Gyeonggi-do (KR)
(74) Representative: Lang, Johannes

(57) **Abstract**

Disclosed is a method for providing an accident broadcasting guidance service of an accident broadcasting guidance system connected to mobile communication terminals. The method includes when an accident has occurred, generating a view-recommendation message of an accident broadcasting sent from a broadcasting station; and transmitting the view-recommendation message to mobile communication terminals within an area in which the accident has occurred. In the method, a view-recommendation message of an accident broadcasting is transmitted to a mobile communication terminal within an area in which the accident has occurred, so that the accident broadcasting can be automatically received in the mobile communication terminal.

## Description

### BACKGROUND OF THE INVENTION

### 1. Field of the Invention

The present invention relates to generally an accident broadcasting guidance system and a method thereof, and in particular, to a system and method, which can provide an accident broadcasting guidance service to mobile communication terminals capable of receiving digital broadcasting in a corresponding area when an accident has occurred.

### 2. Description of the Related Art

Typically, digital broadcasting provides users with services of high picture and speech quality, and high Quality of Service (QoS), as compared to conventional analog broadcasting. Further, digital broadcasting may be classified into satellite digital broadcasting and terrestrial digital broadcasting.

Satellite digital broadcasting aims at providing a mobile service which enables users to watch multi-channel multimedia broadcasting through portable receivers (e.g., cell phones, personal digital assistants, etc.) or a vehicle receiver regardless of the user's global position.

Terrestrial digital broadcasting having been developed from Digital Audio Broadcasting (DAB) provides mobile multimedia broadcasting through a 12^{th} channel of the Very High Frequency (VHF) band, which is currently empty. Terrestrial digital broadcasting represents broadcasting for synthetically transmitting television broadcasting, radio broadcasting and data broadcasting through multi-channels. Existing terrestrial broadcasters have used a single analog channel. However, digital broadcasters have used a plurality of digital channels.

Terrestrial digital broadcasting can transmit three ensembles through one VHF channel, can provide services of about one video channel, two audio channels and one data channel per one ensemble, and targets free broadcasting in expectation of use in vehicles.

Various accidents frequently occur, including natural disasters, such as floods, earthquakes, storms and tidal waves. When the accidents described above have occurred, a broadcasting station typically sends accident broadcasting. Persons within an area in which the accident has occurred watch the accident broadcasting, and cope with the accidents.

However, when it is impossible to watch the accident broadcasting through televisions at home, buildings, etc., when it is impossible to use televisions because of other reasons, or when users have not recognized the occurrence of an accident, users cannot watch the accident broadcasting. Therefore, users cannot quickly cope with the accident. As a result, casualties involving people and property frequently occur.

Accordingly, it is necessary to construct an accident broadcasting guidance system capable of providing an accident broadcasting guidance service through a mobile communication terminal

### SUMMARY OF THE INVENTION

Accordingly, the present invention has been made to solve the above-mentioned problems occurring in the conventional art, and it is an object of the present invention to provide an accident broadcasting guidance system and a method thereof, which can provide an accident broadcasting guidance service through mobile communication terminals capable of receiving digital broadcasting when an accident has occurred.

It is another object of the present invention to provide an accident broadcasting guidance system and a method thereof, which can cause users within an area in which an accident has occurred to quickly recognize the occurrence of the accident.

In order to accomplish the aforementioned objects, according to an aspect of the present invention, there is provided a method for providing an accident broadcasting guidance service of an accident broadcasting guidance system connected to mobile communication terminals, which can receive digital broadcasting, through a wireless network, the method including when an accident has occurred, generating a view-recommendation message of an accident broadcasting sent from a predetermined broadcasting station; and transmitting the generated view-recommendation message to mobile communication terminals within an area in which the accident has occurred.
In order to accomplish the aforementioned objects, according to another aspect of the present invention, there is provided an accident broadcasting guidance server connected to mobile communication terminals, which can receive digital broadcasting, through a wireless network, the accident broadcasting guidance server including a message generator for generating a view-recommendation message of a predetermined digital broadcasting; a transmitter for transmitting the generated view-recommendation message; and a server controller for controlling the message generator to generate a view-recommendation message of an accident broadcasting sent from a predetermined broadcasting station when an accident has occurred, and transmitting the generated view-recommendation message to mobile communication terminals within an area in which the accident has occurred.

In order to accomplish the aforementioned objects, according to further another aspect of the present invention, there is provided a method for providing an accident broadcasting guidance service to mobile communication terminals capable of receiving digital broadcasting, the method including when a predetermined message is received, determining if the received message corresponds to a view-recommendation message of an accident broadcasting; when the received message corresponds to the view-recommendation message of the accident broadcasting, detecting channel information included in the received message; and when the channel information is detected, switching an operation mode of the mobile communication terminal into a digital broadcasting reception mode, and receiving and outputting accident broadcasting of a corresponding channel according to the detected channel information.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram schematically illustrating the construction of an accident broadcasting guidance system according to the present invention;
FIG. 2 is a block diagram illustrating the construction of an accident broadcasting guidance server in the accident broadcasting guidance system according to the present invention;
FIG. 3 is a block diagram illustrating the construction of a mobile communication terminal according to the present invention;
FIG. 4 is a flow diagram illustrating an operation process of an accident broadcasting guidance server according to a first embodiment of the present invention;
FIG. 5 is a flow diagram illustrating an operation process of an accident broadcasting guidance server according to a second embodiment of the present invention;
FIG. 6 is a flow diagram illustrating an operation process of an accident broadcasting guidance server according to a third embodiment of the present invention;
FIG. 7 is a flow diagram illustrating a process in which an mobile communication terminal transmits a view-recommendation message of an accident broadcasting in order to provide an accident broadcasting guidance service according to the present invention;
FIG. 8 is a flow diagram illustrating a processes in which a mobile communication terminal receives and process a view-recommendation message of an accident broadcasting according to a first embodiment of the present invention; and
FIG. 9 is a flow diagram illustrating a processes in which a mobile communication terminal receives and process a view-recommendation message of an accident broadcasting according to a second embodiment of the present invention.

### DETAILED DESCRIPTION OF THE PREFERRED EMBODIMENT

Preferred embodiments of the present invention will be described in detail herein below with reference to the accompanying drawings. The same reference numerals are used to designate the same elements as those shown in other drawings. In the following description, a detailed description of known functions and configurations incorporated herein will be omitted when it may obscure the subject matter of the present invention.

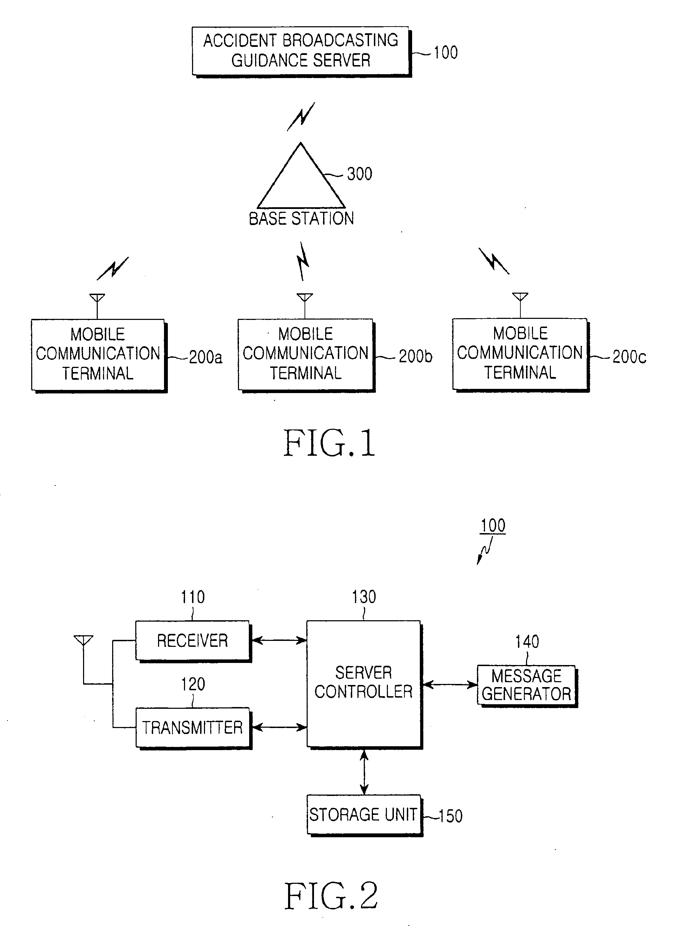

FIG. 1 is a block diagram schematically illustrating the construction of an accident broadcasting guidance system according to the present invention.

Referring to FIG. 1, the accident broadcasting guidance system includes an accident broadcasting guidance server 100, mobile communication terminals 200a to 200c, and a base station 300.

The accident broadcasting guidance server 100 is connected to the mobile communication terminals 200a to 200c capable of receiving digital broadcasting through a wireless network. When an accident has occurred, the accident broadcasting guidance server 100 generates a view-recommendation message of an accident broadcasting sent from a predetermined broadcasting station, and transmits the view-recommendation message to the mobile communication terminals 200a to 200c through the base station 300. The view-recommendation message, which includes the type of accident, channel information (e.g. broadcasting channel numbers and broadcasting station information) of the accident broadcasting sent from the predetermined broadcasting station and an identifier which represents the view-recommendation message, is a message for recommending the watching of the accident broadcasting.

The base station 300 transmits channels used for identifying the base station 300, to which the mobile communication terminals 200a to 200c are connected, while exchanging information with the accident broadcasting guidance server 100. The mobile communication terminals 200a to 200c establish wireless channels with the base station 300, and communicate with the base station 300.

FIG. 2 is a block diagram illustrating the construction of the accident broadcasting guidance server 100 in the accident broadcasting guidance system according to the present invention. Referring to FIG. 2, the accident broadcasting guidance server 100 includes a receiver 110, a transmitter 120, a server controller 130, a message generator 140 and a storage unit 150.

When an accident has occurred, the receiver 110 receives channel information (e.g., channel numbers) of an accident broadcasting, which has been sent from a predetermined broadcasting station, from an external apparatus (e.g. a broadcasting station and a separate server) under the control of the server controller 130.

The receiver 110 receives a view-recommendation message of an accident broadcasting from a predetermined mobile communication terminal, and outputs the view-recommendation message to the server controller 130.

The transmitter 120 transmits the view-recommendation message to mobile communication terminals within an area in which the accident has occurred under the control of the server controller 130. It is preferred to transmit the view-recommendation message in the form of a short message.

The server controller 130 controls the general operations of the accident broadcasting guidance server 100 according to the present invention. When the accident has occurred, the server controller 130 controls the message generator 140 to generate the view-recommendation message of the accident broadcasting sent from the predetermined broadcasting station. The message generator 140 generates the view-recommendation message of a predetermined digital broadcasting (e.g., accident broadcasting) under the control of the server controller 130. The view-recommendation message includes both channel information of the accident broadcasting and an identifier which represents that this message is a message for recommending the watching of the accident broadcasting.

Hereinafter, a method by which the message generator 140 generates the view-recommendation message including the channel information and the identifier as a Short Message Service (SMS) message will be described in detail with reference to Tables 1 to 4.

Tables 1 to 4 shows fields necessary for configuring the SMS message based on a predetermined standard.

**Table 1**

| Field | Length (bits) |
|---|---|
| SMS_MSG_TYPE | 8 |

One more occurrences of the following parameter record:

| | |
|---|---|
| PARAMETER_ID | 8 |
| PARAMETER_LEN | 8 |
| Parameter Data | 8xPARAMETER_LEN |

**Table 2**

| Parameter | Type |
|---|---|
| Teleservice identifier | Mandatory |
| Service Category | Optional |
| Originating Address | Mandatory [1] |
| Originating Subaddress | Optional [1] |
| Destination Address | Mandatory [2] |
| Destination Subaddress | Optional [2] |
| Bearer Reply Option | Optional |
| Bearer Data | Optional |
| [1] For Mobile-terminated message (not present in mobile originated messages) | |
| [2] For Mobile-originated message (not present in mobile terminated messages) | |

**Table 3**

| Field | Length (bits) |
|---|---|
| PARAMETER_ID | 8 |
| PARAMETER_LEN | 8 |
| IDENTIFIER | 16 |

**Table 4**

| Field | Length (bits) |
|---|---|
| SUBPARAMETER_ID | 8 |
| SUBPARAM_LEN | 8 |
| Subparameter Data | 8xSUBPARAM_LEN |

In order to configure the view-recommendation message according to the present invention in the form of an SMS message, it is necessary for the field PARAMENTER_ID, among the fields as shown in Table 1, to have a value of Teleservice identifier. The other fields are configured as in a conventional SMS message. Accordingly, the description of the other fields will be omitted.

Table 2 shows values available for the field PARAMETER_ID. When the field PARAMETER_ID has the value of Teleservice identifier, fields are configured as shown in Table 3. The IDENTIFIER value of the Teleservice identifier must be considered when configuring the view-recommendation message in the form of an SMS message.

The IDENTIFIER value of the Teleservice identifier is used in order to identify if a message is an SMS, a Multimedia Message Service (MMS), or a Cell Broadcasting Service (CBS). The IDENTIFIER value has been stipulated with mobile communication provider networks. In the present invention, a predetermined broadcasting identifier, which represents a view-recommendation message of an accident broadcasting, is newly recorded in the IDENTIFIER value of the Teleservice identifier. In this way, since the identifier is newly recorded, fields as shown in Table 4 are added to the SMS message representing the view-recommendation message through the new recording of the broadcasting identifier in order to ensure a space. The space is utilized for storing the type of accident, channel numbers and accident broadcasting-related information. The channel numbers can be included in the accident broadcasting-related information.

The message generator 140 sets a predetermined identifier as the IDENTIFIER value of the Teleservice identifier, and sets the SUBPARAMETER_ID in Table 4, which is added to the SMS message representing the view-recommendation message, as an identifier representing the type of accident (e.g., earthquake, war, etc.), so that data representing the type of accident can be included in the view-recommendation message.

The message generator 140 sets the Subparameter Data as accident broadcasting-related information including channel numbers and broadcasting station information, so that it is possible to insert channel information into the view-recommendation message. Accordingly, in the present invention, the channel information denotes information including channel numbers and broadcasting station information. Thus, the SMS view-recommendation message of the accident broadcasting, including the identifier, which represents the accident broadcasting view-recommendation message and the channel information, is generated.

In addition, a separate space for storing the identifier and the channel information of the accident broadcasting (i.e. the channel numbers and the broadcasting station information is allocated to the content field of the message, so that it is also possible to store the identifier and the channel number.

The server controller 130 controls the generated view-recommendation message to be transmitted to mobile communication terminals within an area in which the accident has occurred through the transmitter 120.

In the meantime, if the view-recommendation message of the accident broadcasting is received by the receiver 110, the server controller 130 can control the received view-recommendation message to be transmitted to the mobile communication terminals within the area in which the accident has occurred, without generating a separate view-recommendation message of the accident broadcasting.

Herein, if the received view-recommendation message corresponds to the message transmitted from the mobile communication terminal within the area in which the accident has occurred, the server controller 130 can also control the received view-recommendation message to be transmitted to all mobile communication terminals within the area in which the mobile communication terminal is located.

The storage unit 150 stores the channel information of the accident broadcasting received from the external apparatus when the accident has occurred, which may store information for the area in which the accident has occurred.

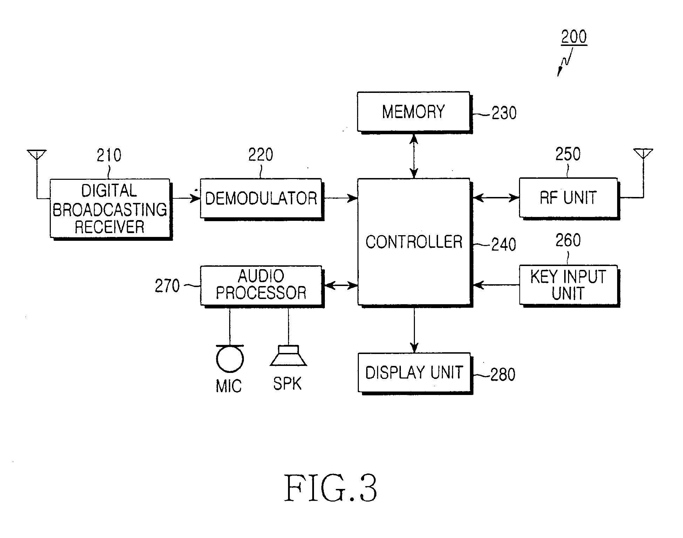

FIG. 3 is a block diagram illustrating the construction of the mobile communication terminal 200 according to the present invention. It is assumed that the mobile communication terminal 200 is a terminal capable of receiving a digital broadcasting. Referring to FIG. 3, the mobile communication terminal 200 includes a digital broadcasting receiver 210, a demodulator 220, a memory 230, a controller 240 (e.g. an MSM), a Radio Frequency (RF) unit 250, a key input unit 260, an audio processor 270 and a display unit 280.

The digital broadcasting receiver 210 receives predetermined digital broadcasting signals and outputs the digital broadcasting signals to the demodulator 220 under the control of the controller 240. The demodulator 220 demodulates the digital broadcasting signals received from the digital broadcasting receiver 210 into digital broadcasting streams, and outputs the digital broadcasting streams to the controller 240. The memory 230 stores various information necessary for controlling the operations of the mobile communication terminal 200 according to the present invention.

The controller 240 controls the general operations of the mobile communication terminal 200 and demultiplexes the digital broadcasting streams output from the demodulator 220 into audio data streams and video data streams, decodes the audio data streams and the video data streams into analog audio signals and analog image signals, and outputs the analog audio signals and the analog image signals to the audio processor 270 and the display unit 280, respectively. However, it is also possible to provide a separate multimedia unit for performing the function as described above.

If a predetermined message is received in the RF unit 250, the controller 240 determines if the received message is a view-recommendation message of an accident broadcasting. If the received message is the view-recommendation message, the controller 240 detects channel information included in the received message. Herein, if an identifier representing the view-recommendation message of accident broadcasting is included in the received message, the controller 240 determines that the message is the view-recommendation message.

After detecting the channel information, the controller 240 switches an operation mode of the mobile communication terminal 200 into a digital broadcasting reception mode. The controller 240 receives the accident broadcasting of a corresponding channel through the digital broadcasting receiver 210 according to the detected channel information, and outputs the received accident broadcasting. If the received message is the view-recommendation message of the accident broadcasting, the controller 240 may also report the reception of the view-recommendation message through voice or character messages before detecting the channel information. In this case, if input information (e.g. key input) representing approval for the watching of the accident broadcasting is received from a user, it is preferred to detect the channel information and switch the operation mode of the mobile communication terminal 200 into the digital broadcasting reception mode.

If a transmission request for a view-recommendation message of the accident broadcasting is received from a user while the mobile communication terminal 200 outputs the accident broadcasting, the controller 240 controls generation of the view-recommendation message of the accident broadcasting. Herein, the controller 240 may directly generate the view-recommendation message or a separate generator may also generate the view-recommendation message.

If the view-recommendation message is generated, the controller 240 transmits the generated view-recommendation message to the accident broadcasting guidance server 100 in FIG. 1. It is preferred to store an address of the accident broadcasting guidance server 100 in advance.

The RF unit 250 includes an RF transmitter for up-converting and amplifying the frequency of transmitted signals, and an RF receiver for low-noise amplifying received signals and down-converting the frequency of the received signals, etc. The RF unit 250 signifies a comprehensive element of a high frequency processor, an Intermediate Frequency (IF) processor and a baseband processor. The RF unit 250 transmit/receives voice data, character data (e.g. a short message), image data and control data under the control of the controller 240.

The key input unit 260 transfers signals corresponding to an external command to the controller 240. That is, the key input unit 260 transfers operation signals of a user such as key input to the controller 240. The operation signals of the user may include input information for controlling the controller 240 or user selection information.

The audio processor 270 may include a codec, and the codec includes a data codec for processing packet data, etc., and an audio codec for processing audio signals such as voice. The audio processor 270 converts digital audio signals received through the RF unit 250 into analog signals through the audio codec for reproduction, or converts analog audio signals generated from a microphone into digital audio signals through the audio codec. The codec may also be separately provided or included in the controller 240.

The display unit 280 displays various display data generated from the mobile communication terminal 200. It is preferred to use a Liquid Crystal Display (LCD) capable of sufficiently supporting resolution of the digital broadcasting data. When the LCD has a touch screen function, the display unit 280 may also function as an input unit.

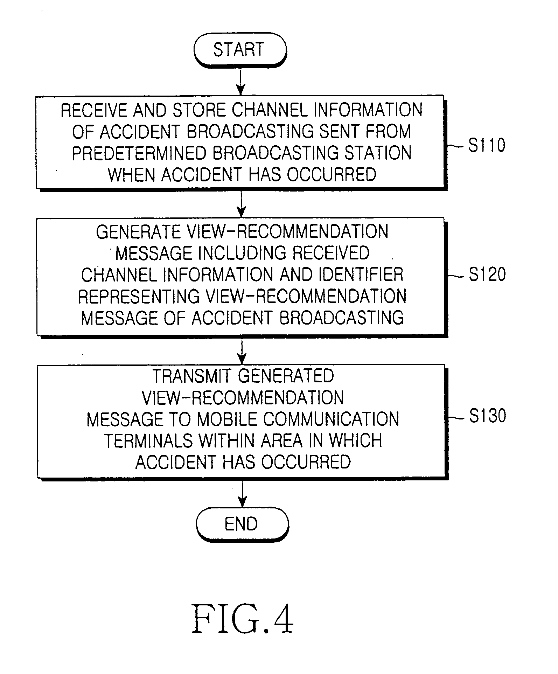

FIG. 4 is a flow diagram illustrating an operation process of the accident broadcasting guidance server 100 according to a first embodiment of the present invention. Hereinafter, the operation process will be described with reference to FIGs. 1 and 2.

When an accident has occurred, the server controller 130 controls the receiver 110 to receive channel information of an accident broadcasting, which has been sent from a predetermined broadcasting station, from an external apparatus (e.g. a broadcasting station and a separate server), and stores the received channel information in the storage unit 150 (S110). It is preferred that the server controller 130 separately receives and stores information for the area in which the accident has occurred. However, the server controller 130 may also receive the information for the area in which the accident has occurred together with the channel information. Further, various channel information of the accident broadcasting may exist according to the number of accident broadcasting programs.

If the channel information of the accident broadcasting is received, the server controller 130 controls the message generator 140 to generate a view-recommendation message including the channel information and an identifier representing that this message is a view-recommendation message of the accident broadcasting (S 120).

The server controller 130 transmits the generated view-recommendation message to mobile communication terminals within the area in which the accident has occurred through the base station 300 (S130).

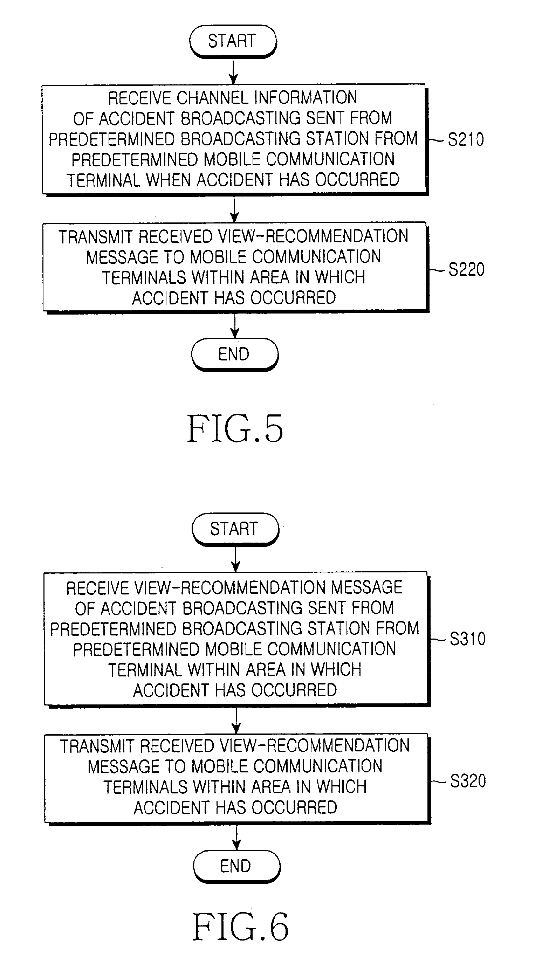

FIG. 5 is a flow diagram illustrating an operation process of the accident broadcasting guidance server 100 according to a second embodiment of the present invention, with reference to FIGs. 1 and 2.

When an accident has occurred, the server controller 130 controls the receiver 110 to receive a view-recommendation message of an accident broadcasting, which has been sent from a predetermined broadcasting station, from a predetermined mobile communication terminal (S210).

If the view-recommendation message of the accident broadcasting transmitted from the predetermined mobile communication terminal is received in the receiver 110, the server controller 130 controls the transmitter 120 to transmit the received view-recommendation message to mobile communication terminals within an area in which the accident has occurred through the base station 300 (S220).

FIG. 6 is a flow diagram illustrating an operation process of the accident broadcasting guidance server 100 according to a third embodiment of the present invention, with reference to FIGs. 1 and 2.

When an accident has occurred, the server controller 130 controls the receiver 110 to receive a view-recommendation message of accident broadcasting, which has been sent from a predetermined broadcasting station, from a predetermined mobile communication terminal within an area in which the accident has occurred (S310).

If the view-recommendation message of the accident broadcasting is received in the receiver 110, the server controller 130 controls the transmitter 120 to transmit the received view-recommendation message to mobile communication terminals within an area in which the predetermined mobile communication terminal is located through the base station 300 (S320).

Hereinafter, an operation process of the mobile communication terminal included in the accident broadcasting guidance system will be described.

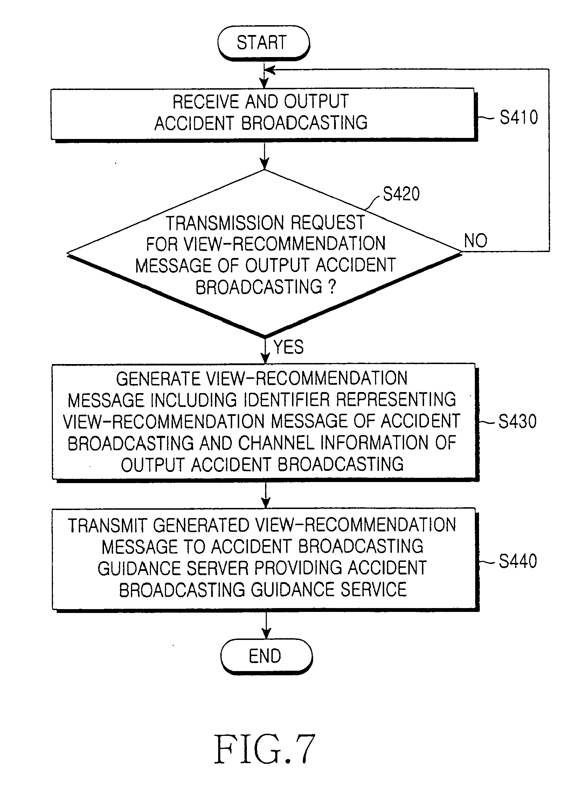

FIG. 7 is a flow diagram illustrating a process in which the mobile communication terminal transmits the view-recommendation message of the accident broadcasting in order to provide an accident broadcasting guidance service according to the present invention.

Referring to FIGs. 3 and 7, the controller 240 outputs the accident broadcasting received in the digital broadcasting receiver 210 through an output unit (S410). The output unit represents the audio processor 270 and the display unit 280.

The controller 240 checks if the transmission request for the view-recommendation message of the accident broadcasting is received from a user during the output of the accident broadcasting (S420). The user may input a hot key having been preset in the key input unit 260 in order to request the transmission of the view-recommendation message, or the user may request the transmission of the view-recommendation message through a menu key. The hot key may be a key provided in the key input unit 260 or the hot key may be a separate key.

If the transmission request for the view-recommendation message is received from the user, the controller 240 generates the view-recommendation message including both the identifier representing that this message is the view-recommendation message of the accident broadcasting and the channel information of the accident broadcasting (S430).

The controller 240 transmits the generated view-recommendation message to the accident broadcasting guidance server 100 for providing the accident broadcasting guidance service (S440).

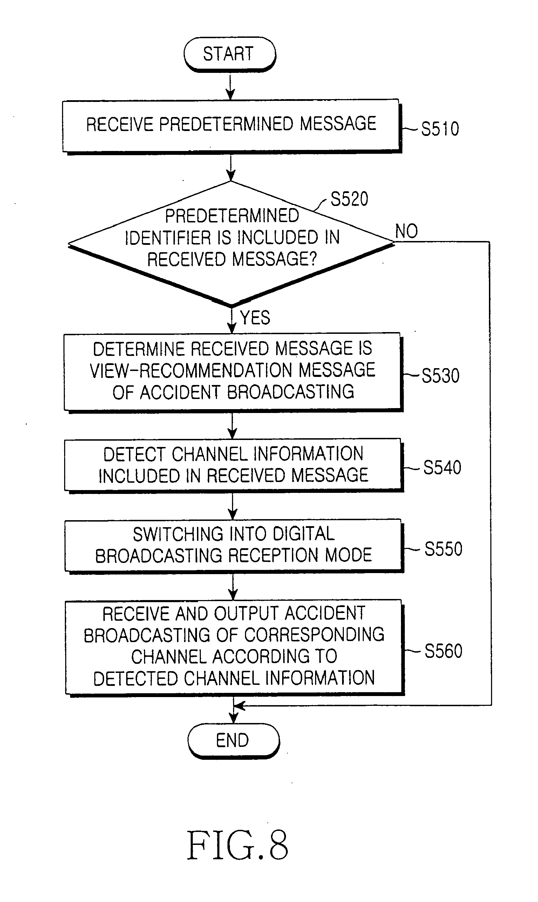

FIG. 8 is a flow diagram illustrating a process in which the mobile communication terminal receives and processes the view-recommendation message of the accident broadcasting according to the first embodiment of the present invention. Referring to FIGs. 3 and 8, the controller 240 receives a predetermined message through the RF unit 250 (S510).

If the predetermined message is received in the RF unit 250, the controller 240 checks if a predetermined identifier is included in the received message (S520). The identifier represents that the received message corresponds to a view-recommendation message of an accident broadcasting. If the predetermined identifier is included in the received message, the controller 240 determines the received message is the view-recommendation message of the accident broadcasting (S530).

After determining the received message is the view-recommendation message of the accident broadcasting, the controller 240 detects the channel information included in the received message, i.e. the channel information of the accident broadcasting, (S540). After detecting the channel information, the controller 240 switches an operation mode of the mobile communication terminal 200 into a digital broadcasting reception mode (S550).

The controller 240 receives the accident broadcasting (i.e., accident broadcasting) of a corresponding channel through the digital broadcasting receiver 210 according to the detected channel information, and outputs the received accident broadcasting through an output unit (S560).

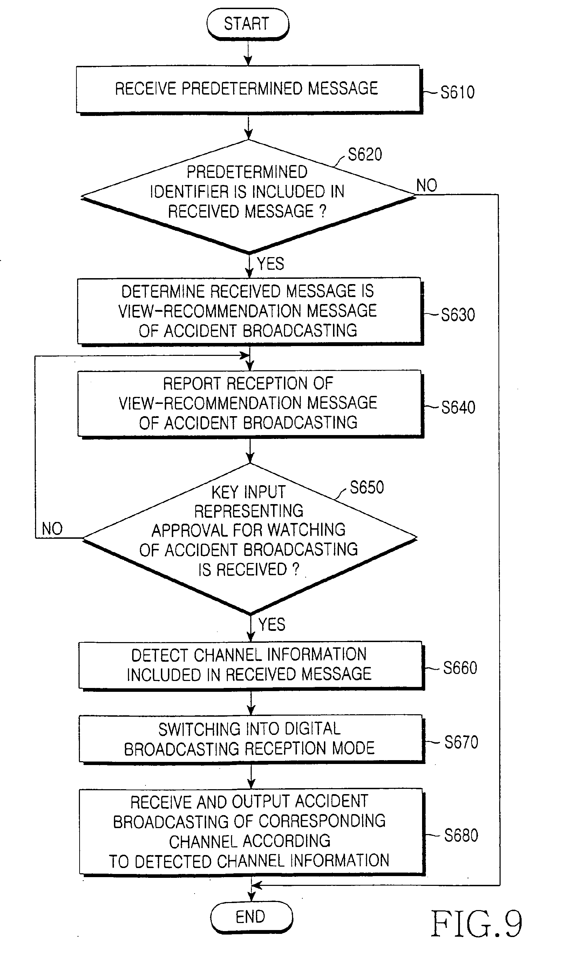

FIG. 9 is a flow diagram illustrating a process in which the mobile communication terminal receives and processes the view-recommendation message of the accident broadcasting according to the second embodiment of the present invention.

Referring to FIGs. 3 and 9, the controller 240 receives a predetermined message through the RF unit 250 (S610).

If the predetermined message is received in the RF unit 250, the controller 240 checks if a predetermined identifier is included in the received message (S620). The identifier represents that the received message corresponds to a view-recommendation message of an accident broadcasting.

If the predetermined identifier is included in the received message, the controller 240 determines the received message is the view-recommendation message of the accident broadcasting (S630).

After determining the received message is the view-recommendation message of the accident broadcasting, the controller 240 reports the reception of the view-recommendation message of the accident broadcasting (S640). It is preferred that the controller 240 reports the reception of the view-recommendation message through voice or character messages.

After reporting the reception of the view-recommendation message, the controller 240 checks if key input representing approval for the watching of the accident broadcasting is received from a user (S650). It is preferred that the controller 240 periodically reports the reception of the view-recommendation message until the key input is received from the user. If the key input representing the approval for the watching of the accident broadcasting is received through the key input unit 260, the controller 240 detects the channel information included in the received message (S660). The controller 240 switches an operation mode of the mobile communication terminal 200 into a digital broadcasting reception mode (S670).

The controller 240 receives and outputs the accident broadcasting of a corresponding channel in the digital broadcasting reception mode through the digital broadcasting receiver 210 according to the detected channel information (S680).

According to the present invention as described above, when an accident has occurred, a view-recommendation message of an accident broadcasting is transmitted to a mobile communication terminal within an area in which the accident has occurred, so that the accident broadcasting can be automatically received in the mobile communication terminal. Accordingly, a corresponding user can quickly cope with the urgent accident, which can reduce casualties involving person and property and contribute to convenience of users.

Further, according to the present invention, when an accident has occurred, mobile communication terminal users within an area in which the accident has occurred can quickly recognize the occurrence of the accident.

Although preferred embodiments of the present invention has been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for providing an accident broadcasting guidance service of an accident broadcasting guidance system connected to mobile communication terminals, which can receive digital broadcasting, through a wireless network, the method comprising the steps of:
when an accident has occurred, generating a view-recommendation message of an accident broadcasting sent from a predetermined broadcasting station; and
transmitting the generated view-recommendation message to mobile communication terminals within an area in which the accident has occurred.

2. The method as claimed in claim 1, wherein the step of generating the view-recommendation message comprises receiving and storing channel information of the accident broadcasting sent from the predetermined broadcasting station when the accident has occurred.

3. The method as claimed in claim 1, wherein, in the step of transmitting the generated view-recommendation message, the generated view-recommendation message is transmitted in a form of a Short Message Service (SMS) message.

4. The method as claimed in claim 1, wherein the view-recommendation message includes both channel information of the accident broadcasting sent from the predetermined broadcasting station and an identifier representing that the message is a view-recommendation message of an accident broadcasting.

5. The method as claimed in claim 1, further comprising
receiving the view-recommendation message of the accident broadcasting, which has been sent from the predetermined broadcasting station, from a predetermined mobile communication terminal; and
transmitting the received view-recommendation message to all mobile communication terminals within the area in which the accident has occurred.

6. The method as claimed in claim 1, further comprising
receiving the view-recommendation message of the accident broadcasting, which has been sent from the predetermined broadcasting station, from the mobile communication terminal within the area in which the accident has occurred; and
transmitting the received view-recommendation message to the mobile communication terminals within the area in which the accident has occurred.

7. An accident broadcasting guidance server connected to mobile communication terminals, which can receive digital broadcasting, through a wireless network, the accident broadcasting guidance server comprising:
a message generator for generating a view-recommendation message of a predetermined digital broadcasting;
a transmitter for transmitting the generated view-recommendation message; and
a server controller for controlling the message generator to generate a view-recommendation message of an accident broadcasting sent from a predetermined broadcasting station when an accident has occurred, and for controlling the transmitter for transmitting the generated view-recommendation message to mobile communication terminals within an area in which the accident has occurred.

8. The accident broadcasting guidance server as claimed in claim 7, further comprising:
a receiver for receiving channel information of the accident broadcasting, which has been sent from the predetermined broadcasting station, from an external apparatus when the accident has occurred; and
a storage unit for storing the received channel information of the accident broadcasting.

9. The accident broadcasting guidance server as claimed in claim 8, wherein the server controller controls generation of the view-recommendation message including both the channel information of the accident broadcasting stored in the storage unit and an identifier representing that the message is the view-recommendation message of the accident broadcasting, when the accident has occurred.

10. The accident broadcasting guidance server as claimed in claim 8, wherein, when a view-recommendation message of an accident broadcasting transmitted from a predetermined mobile communication terminal is received in the receiver, the server controller controls the received view-recommendation message to be transmitted to the mobile communication terminals within the area in which the accident has occurred.

11. The accident broadcasting guidance server as claimed in claim 7 wherein, when a view-recommendation message of an accident broadcasting is received from a mobile communication terminal within the area in which the accident has occurred, the server controller controls the received view-recommendation message to be transmitted to all mobile communication terminals within the area in which the mobile communication terminal is located.

12. The accident broadcasting guidance server as claimed in claim 7, wherein the transmitter transmits the generated view-recommendation message in a form of a Short Message Service (SMS) message under control of the server controller.

13. A method for providing an accident broadcasting guidance service to mobile communication terminals capable of receiving digital broadcasting, the method comprising the steps of:
when a predetermined message is received, determining if the received message corresponds to a view-recommendation message of an accident broadcasting;
when the received message corresponds to the view-recommendation message of the accident broadcasting, detecting channel information included in the received message; and
when the channel information is detected, switching an operation mode of a mobile communication terminal into a digital broadcasting reception mode, and receiving and outputting accident broadcasting of a corresponding channel according to the detected channel information.

14. The method as claimed in claim 13, wherein, in the step of determining, when an identifier representing the view-recommendation message of the accident broadcasting is included in the received message, the received message is determined to be the view-recommendation message of the accident broadcasting.

15. The method as claimed in claim 13, wherein detecting the channel information comprises:
when the received message corresponds to the view-recommendation message of the accident broadcasting, reporting reception of the message; and
when input information representing approval for watching the accident broadcasting is input from a user, detecting the channel information included in the message.

16. The method as claimed in claim 13, further comprising :
when a transmission request for the view-recommendation message of the accident broadcasting is received from a user while the mobile communication terminal outputs the accident broadcasting, generating the view-recommendation message of the accident broadcasting; and
transmitting the generated view-recommendation message to an accident broadcasting guidance server for providing the accident broadcasting guidance service.

17. The method as claimed in claim 16, wherein, in the step of transmitting, the generated view-recommendation message is transmitted in a form of a Short Message Service (SMS) message.
